# EUROPEAN PATENT APPLICATION

(11) **EP 1 589 408 A2**
(43) Date of publication of application: **26.10.2005**
(21) Application number: 05008618.0
(22) Date of filing: 20.04.2005
(51) Int. Cl.: G06F 3/033

(54) **Display device having optical input function**

(30) Priority: 22.04.2004 JP 2004127161
(71) Applicant: Toshiba Matsushita Display Technology Co., Ltd., Minato-ku, Tokyo (JP)
(72) Inventor: Yoshida, Masahiro, Fukaya-shi Saitama-ken (JP)
(74) Representative: HOFFMANN EITLE

(57) **Abstract**

In order to detect pressure of a light source device against a display screen of a display device, the light source device changes an area of a light receiving region on the display screen in response to a degree of pressure of a tip of the light source device against the display screen. Meanwhile, a signal processing unit of the display device calculates a distance between a light transmission unit of the light source device and the display screen. By using this distance, the degree of pressure of can be detected. Moreover, in order to prevent malfunction attributable to outside environment light and to reduce power consumption of a light source unit of the light source device, the light source unit is configured not to output light when the tip of the light source device is not pressed against the display screen.

## Description

### CROSS-REFERENCE TO RELATED APPLICATIONS

This application is based upon and claims the benefit of priority from Japanese Patent Application No. 2004-127161 filed on April 22, 2004; the entire contents of which are incorporated herein by reference.

### BACKGROUND OF THE INVENTION

### 1. Field of the Invention

The present invention relates to a display device capable of inputting positional information by use of light from a light source irradiated onto a display screen.

### 2. Description of the Related Art

In recent years, liquid crystal display devices are widely used as display devices in various instruments such as cellular telephones and notebook personal computers. A liquid crystal display device includes an array substrate in which pixels are arranged at respective intersections of a plurality of scan lines and a plurality of signal lines, and drive circuits for driving the scan lines and the signal lines. Each of the pixels includes a thin film transistor (TFT), a liquid crystal capacitor, and an auxiliary capacitor. Along with development in the techniques for integrated circuits and practical use of the process techniques in recent years, it is possible to form part of the drive circuits on the array substrate today. In this way, reduction in weight and size of the entire liquid crystal display device has been promoted.

Meanwhile, there is also disclosed a display device including an optical sensor element on an array substrate and having an optical input function for capturing an image by using the light. In this display device, respective pixels include photodiodes as the optical sensor elements, for example. A capacitor is connected to each of the photodiodes. Since a charge quantity of the capacitor varies depending on an amount of light received by the photodiode, it is possible to generate image data by detecting voltages on both ends of the capacitor. This display device offers image processing capable of producing multiple tone image data corresponding to irradiation strength of incident light.

Meanwhile, there is also disclosed a method of importing data while displaying the image by inserting an image capturing frame between display frames for displaying an image. By using this method, it is possible to use a display device as a coordinate input device by touching a display screen with a finger or by irradiating light onto the display screen with a pen-shaped light source.

Incidentally, when using the pen-shaped light source, it is necessary to press a pen tip of the light source against the display screen. However, in the conventional display device, it is difficult to detect the degree of pressure of the pen tip against the display screen.

Moreover, the optical sensor element also reacts to outside environment light other than the light from the light source. Accordingly, depending on the environment, malfunction may occur during the coordinate input processing.

In addition, power consumption is increased when blinking the pen-shaped light source. Accordingly, battery costs are increased.

### SUMMARY OF THE INVENTION

An object of the present invention is to detect pressure of a light source against a display screen.

Another object of the present invention is to prevent malfunction caused by the outside environment light.

Still another object of the present invention is to reduce power consumption of a light source.

An optical input display device of the present invention includes a light source device and a display device. The light source device includes: a light source unit configured to irradiate light when a tip of the light source unit is pressed against a display screen of the display device; and a light transmission unit configured to transmit the light from the light source unit so as to change any of light reception intensity and a light receiving region on the display screen in response to a degree of pressure. The display device includes: a display unit including pixel units configured to display image signals supplied through signal lines and photodetector units configured to detect the light irradiated from the light source device onto the display screen, the pixel units and the photodetector units being provided on intersections of a plurality of scan lines and the plurality of signal lines; a light reception and detection unit configured to detect any of light reception intensity and the light receiving region of the light from the light transmission unit on the display screen based on light detection signals from the photodetector units; and a distance calculation unit configured to calculate a distance between the light transmission unit and the display screen based on any of the detected light reception intensity and the detected light receiving region.

According to the present invention, when the tip of the light source device is pressed against the display screen, the light source device changes the area of the light receiving region in response to the degree of this pressure. Meanwhile, the distance calculation unit of the display device calculates the distance between the light transmission unit of the light source device and the display screen based on this light receiving region. In another case, the light source device changes the light reception intensity on the display screen in response to the degree of the pressure against the display screen. Meanwhile, the distance calculation unit calculates the distance between the light transmission unit and the display screen based on this light reception intensity. By using this distance, it is possible to detect the degree of pressure of the light source device against the display screen.

Moreover, according to the present invention, the light source unit does not output the light when the tip of the light source unit is not pressed against the display screen. Therefore, it is possible to prevent malfunction attributable to outside environment light and to reduce power consumption by the light source unit by stopping the light detecting operation in the display unit.

### BRIEF DESCRIPTION OF THE DRAWINGS

Fig. 1 shows a schematic block diagram of an optical input display device according to an embodiment of the present invention.
Fig. 2A shows a cross-sectional view of a pen-shaped light source device shown in Fig. 1, and Fig. 2B shows a circuit diagram of a light source unit.
Fig. 3 shows a circuit block diagram of a display unit shown in Fig. 1.
Fig. 4A shows a cross-sectional view in which the light source device shown in Fig. 1 is pressed against a display screen of the display unit, and Fig. 4B shows a light receiving region on the display screen in this case.
Fig. 5A shows a cross-sectional view in which the light source device shown in Fig. 1 is pressed against the display screen of the display device more strongly than the case shown in Fig. 4, and Fig. 5B shows the light receiving region on the display screen in this case.
Fig. 6A shows an enlarged perspective view of a tip of the light source device having a modified structure, Fig. 6B shows an optical pattern on the display screen when light is irradiated from the light source device, and Fig. 6C shows a matching pattern corresponding to the optical pattern.
Fig. 7 shows a schematic block diagram of another optical input display device.
Fig. 8 shows a timing chart for describing operations of respective units of the optical input display device shown in Fig. 7.
Fig. 9 shows a table of truth values for logical calculus in the optical input display device shown in Fig. 7.

### DESCRIPTION OF THE EMBODIMENTS

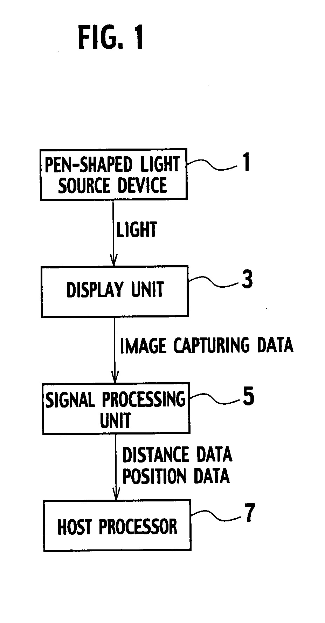

As shown in Fig. 1, an optical input display device according to an embodiment includes a pen-shaped light source device 1 and a display device. This display device includes a display unit 3, a signal processing unit 5, and a host processor 7.

The light source device 1 includes a light source unit configured to irradiate light when a pen tip at an end of the light source device 1 is pressed against a display screen of the display device, and a light transmission unit configured to transmit the light from the light source unit so as to change an area of a light receiving region on the display screen in response to a degree of pressure of the pen tip.

The display unit 3 has a display function for displaying an arbitrary image on the display screen, and an optical input function for detecting the light irradiated from the light source device 1 onto the display screen.

The signal processing unit 5 includes a light reception and detection unit, a distance calculation unit, and a position calculation unit. The light reception and detection unit receives a light detection signal detected by the display unit 3 and detects the light receiving region on the display screen based on this light detection signal. The distance calculation unit calculates a distance between the light transmission unit of the light source device 1 and the display screen based on the detected light receiving region. The position calculation unit calculates a position of irradiation of the light on the display screen based on the detected light receiving region.

The host processor 7 receives distance data and position data from the signal processing unit 5 and performs a variety of processing. For example, the host processor 7 connects a plurality of positions of the display screen specified by a plurality of pieces of the position data on the display screen with lines, and displays the positions on the display screen. Meanwhile, the host processor 7 changes the thickness of the line to be displayed on the display screen to a thin line, a thick line, a medium line, and the like in response to the distance data.

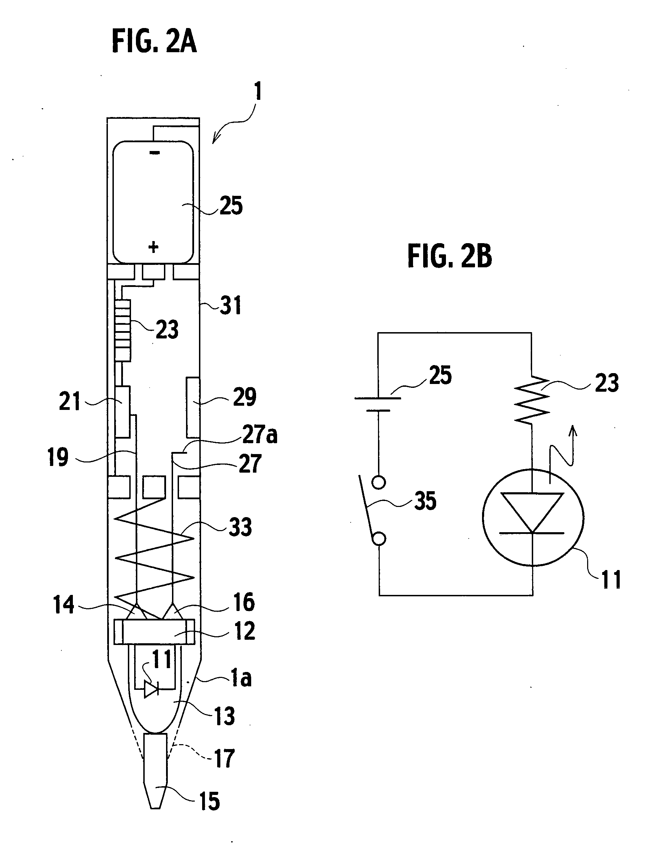

As shown in a cross-sectional view in Fig. 2A, the light source device 1 includes a light transmission unit 17 as illustrated with dashed lines therein, which is provided at a tip of a pen-shaped housing 31 having a tip 1a formed into a tapered cone shape or a tapered pyramid shape. The light transmission unit 17 is also formed into a tapered cone shape or a tapered pyramid shape, and includes an aperture at a tip portion thereof. A bar-shaped transparent pen tip 15, which can transmit the light, protrudes out of this aperture. The light transmission unit 17 is formed so as to transmit the light from the aperture to a predetermined position. In order to avoid leakage of the light emitted from the light source unit out of portions other than the light transmission unit 17 and the pen tip 15, the housing 31 is formed so as not to transmit the light.

In the light source device 1, a light emitting diode 11 is provided inside the tip 1a, and a lens 13 is provided between this light emitting diode 11 and the pen tip 15. The light emitting diode 11 is covered with the lens 13, and the light emitting diode 11 and the lens 13 are integrally fitted to an insulative base 12. An anode terminal 14 and a cathode terminal 16 of the light emitting diode 11 protrude out of this base 12. The light emitting diode 11 and the lens 13 will be hereinafter collectively referred to as the light source unit.

The light outputted from the light emitting diode 11 and passed through the lens 13 is transmitted through the light transmission unit 17 and the pen tip 15 and is outputted to outside. The anode terminal 14 of the light emitting diode 11 is connected to one end of a conductor 19. The other end of this conductor 19 electrically and movably contacts a conductive first mechanical contact member 21 which is disposed close to an inner wall of the light source device 1.

The first mechanical contact member 21 is connected to a positive electrode (+) of a battery 25 through a resistor 23. A negative electrode (-) of the battery 25 is electrically connected to the housing 31 of the light source device 1 and, through the housing 31, is further electrically connected to a second mechanical contact member 29 fitted to the inner wall of the housing 31.

The cathode terminal 16 of the light emitting diode 11 is connected to one end of a conductor 27. The other end 27a of the conductor 27 is bent perpendicularly and protrudes toward the vicinity of the second mechanical contact member 29. The other end 27a of the conductor 27 and the second mechanical contact member 29 collectively constitute a switch 35 as shown in a circuit diagram in Fig. 2B. The switch 35 is turned on when the other end 27a of the conductor 27 contacts the second mechanical contact member 29 as described later. Here, in the state shown in Fig. 2A, the other end 27a of the conductor 27 is detached from the second mechanical contact member 29. Accordingly, the switch 35 is in an off state.

One end of a compression spring 33 is fitted to the base 12. The other end of this compression spring 33 is fitted to a fixing portion which is provided inside the housing 31. The base 12 and the light source unit are pressed against the pen tip 15 by this compression spring 33, and the pen tip 15 is thereby pressed as well. In this way, an edge of the pen tip 15 slightly protrudes out of the aperture of the tip 1a.

Fig. 2B is an equivalent circuit diagram of the light source device 1. As shown in the drawing, the light source device 1 includes the light emitting diode 11, the resistor 23, the battery 25, and the switch 35 which are connected in series. The switch 35 includes the other end 27a of the conductor 27 and the second mechanical contact member 29. As the switch 35 is turned on, an electric current flows from the positive electrode of the battery 25 to the negative electrode of the battery 25 through the resistor 23, the light emitting diode 11, and the switch 35. The light emitting diode 11 is turned on by this electric current and thereby irradiates the light.

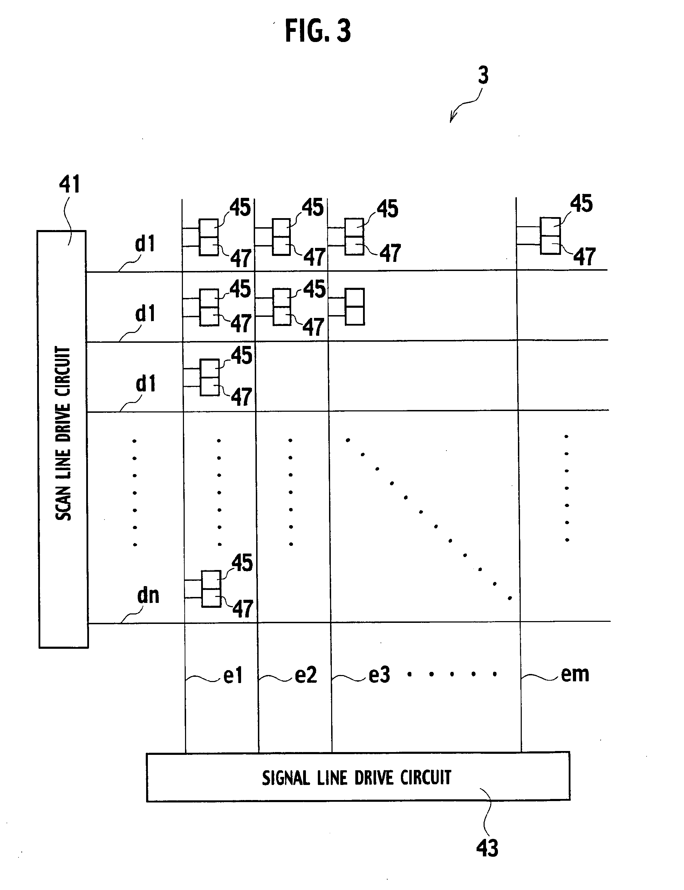

As shown in Fig. 3, the display unit 3 includes pixel units 45 and photodetector units 47, which are disposed at respective intersections of a plurality of scan lines d1, d2, d3,..., and dn arranged in parallel and a plurality of signal lines e1, e2, e3,..., and em arranged in parallel. The pixel unit 45 displays an image signal supplied through the signal line onto the display screen. The photodetector unit 47 detects the light irradiated from the light source device 1 onto the display screen. Scan signals are sequentially outputted to the scan lines d by a scan line drive circuit 41. The image signals are outputted to the signal lines e by a signal line drive circuit 43.

The pixel units 45 and the photodetector units 47 are arranged on a glass array substrate in a matrix of n pieces by m pieces as a whole. By use of recent techniques for integrated circuits and process techniques, it is also possible to provide the scan line drive circuit 41 and the signal line drive circuit 42 on the same array substrate.

Each of the pixel units 45 includes a thin film transistor, a liquid crystal capacitor, and an auxiliary capacitor. Each of the photodetector units 47 includes a photoelectric transducer such as a photodiode, a charge storage capacitor, an amplifier transistor, a switch transistor, and a precharge transistor.

Here, the configuration of the pixel unit 45 is not limited only to the foregoing example, and the pixel unit 45 may include an electroluminescent (EL) element, for example. Meanwhile, the configuration of the photodetector unit 47 is not limited only to the foregoing example, and the photodetector unit 47 may adopt any configuration as long as such a configuration can detect the light irradiated from the light source device 1 onto a display screen 3a of the display unit 3.

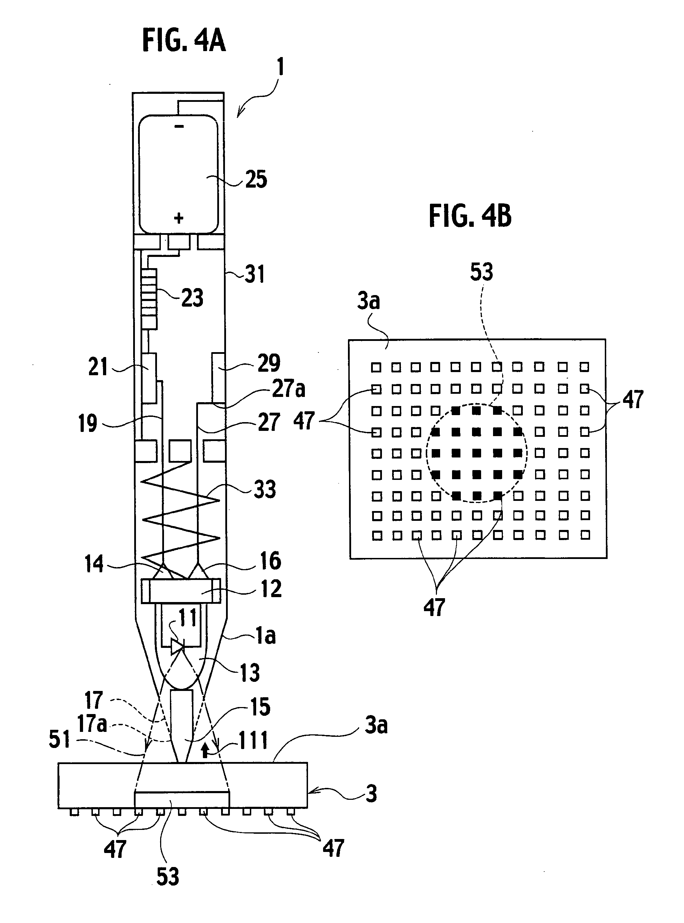

Fig. 4A shows a state where the pen tip 15 of the light source device 1 is pressed against the display screen 3a of the display unit 3. In this drawing, concerning the display unit 3, only the photodetector units 47 out of the pixel units 45 and the photodetector units 47 are illustrated at the bottom while the display screen 3a is illustrated at the top for the purpose of simplification.

In terms of the light source device 1, a clearance between the other end 27a of the conductor 27 and the second mechanical contact member 29 as shown in Fig. 2 is not bridged when the pen tip 15 of the light source device 1 is allowed to contact the display screen 3a of the display unit 3 and is pressed lightly against the display screen 3a. In this case, the switch 35 will not be turned on.

By contrast, as shown in Fig. 4A, when the pen tip 15 of the light source device 1 is pressed against the display screen 3a at given pressure, the pen tip 15 resists the force of the compression spring 33 through the light emitting diode 11, the lens 13, and the base 12, and the pen tip 15 moves into the tip 1a along a direction indicated by an arrow 111. As a result, the conductor 27 connected to the cathode terminal 16 of the base 12 also moves in the same direction. Accordingly, the other end 27a of the conductor 27 contacts the second mechanical contact member 29 to turn the switch 35 on, whereby the light emitting diode 11 emits the light.

The light from the light emitting diode 11 is irradiated onto the display screen 3a through the lens 13, the pen tip 15, and the light transmission unit 17.

This light is irradiated onto the display screen 3a within a range indicated by chain lines 51 in the drawing, and a light receiving region 53 is thereby formed on the display screen 3a. Here, in Fig. 4A, the light receiving region 53 is illustrated in close proximity to a plurality of photodetector units 47 while the display screen 3a is illustrated away from the photodetector units 47 and from the light receiving region 53. However, in reality, planar positions of the photodetector units 47 are almost on the same plane as the display screen 3a. In the following, the light receiving region will be assumed to be formed on the display screen 3a.

Fig. 4B is a top plan view of the display screen 3a on which the light is irradiated while disregarding the light source device 1. This drawing illustrates only the plurality of photodetector units 47, and the pixel units 45, the scan lines d, and the signal lines e are omitted.

In Fig. 4B, the light receiving region 53 on the display screen 3a where the light is irradiated is surrounded by a dashed line. The plurality of photodetector units 47 inside this light receiving region 53 detect the light irradiated from the light emitting diode 11 and output light detection signals independently. In Fig. 4B, the photodetector units 47 existing inside the light receiving region 53 are illustrated in black.

The light detection signals outputted by the plurality of photodetector units 47 as a result of detecting the light are supplied to the signal processing unit 5. In the signal processing unit 5, the light reception and detection unit detects the light receiving region 53 based on the light detection signals, and the distance calculation unit calculates the distance between a tapered tip 17a of the light transmission unit 17 and the display screen 3a based on the light receiving region 53. To be more precise, the distance calculation unit includes an area calculation unit and an area-based distance calculation unit. The area calculation unit calculates the area of the light receiving region 53 based on the number of the photodetector units 47 which detect the light. In Fig. 4B, the number of the photodetector units 47 illustrated in black inside the light receiving region 53 is equal to 21 pieces. The area-based distance calculation unit calculates the distance between the tip 17a of the light transmission unit 17 and the display screen 3a based on this area. Here, the area of the light receiving region 53 can be calculated by use of the number of the light detection signals from the plurality of the photodetector units 47.

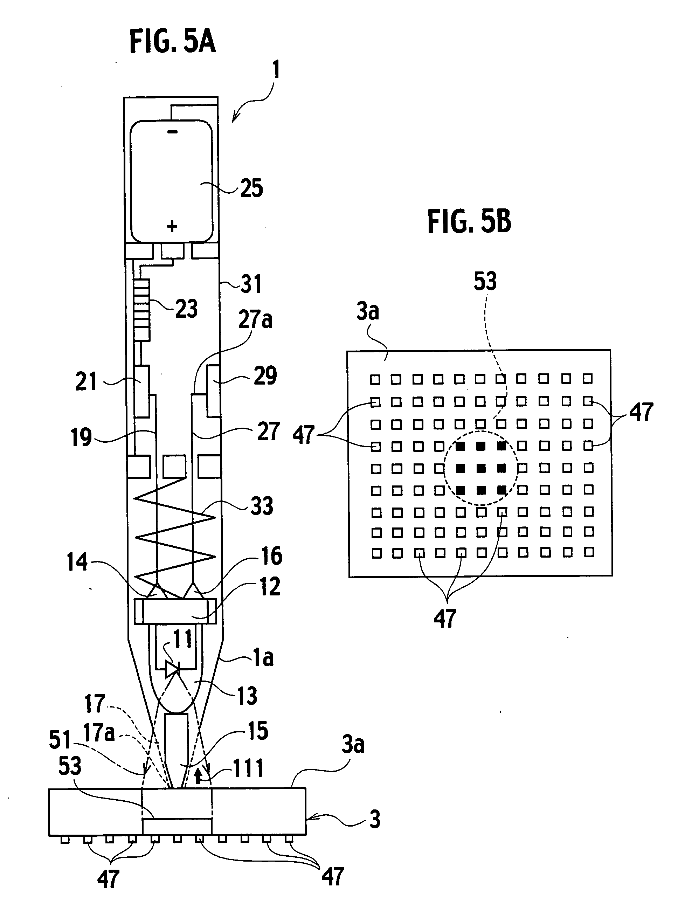

Figs. 5A and 5B show a state where the pen tip 15 of the light source device 1 is pressed strongly against the display screen 3a by applying pressure greater than a predetermined amount. Here, Fig. 5A and Fig. 5B correspond to Fig. 4A and Fig. 4B, respectively.

As shown in Fig. 5A, when the pen tip 15 is pressed against the display screen 3a while applying the pressure greater than the predetermined amount, the pen tip 15 resists the force of the compression spring 33 moves into the aperture along the direction indicated by the arrow 111. Accordingly, the tip 17a of the light transmission unit 17 approaches the display screen 3a. In this case, the size of the light receiving region 53 formed on the display screen 3a by the light irradiated from the light emitting diode 11, that is, the area of the light receiving region 53 becomes smaller as compared to the case shown in Fig. 4A. Moreover, when the tip 17a of the light transmission unit 17 contacts the display screen 3a, the pen tip 15 cannot go further into the aperture and is therefore stopped at that position.

As shown in Fig. 5B, when the display screen 3a on which the light is irradiated from the light emitting diode 11 is viewed from above, the area of the light receiving region 53 formed on this display screen 3a is apparently smaller than the area shown in Fig. 4B. The number of the photodetector units 47 detecting the light and illustrated in black is reduced to 9 pieces.

As described above, the area of the light receiving region 53 becomes large when the tip 17a of the light transmission unit 17 is far from the display screen 3a, and the area of the light receiving region 53 becomes small when the tip 17a of the light transmission unit 17 is close to the display screen 3a. The distance between the light transmission unit 17 and the display screen 3a has the above-described relation with the area of the light receiving region.

Therefore, it is possible to calculate the area of the light receiving region 53 by counting either the number of the photodetector units 47 outputting the light detection signals or the number of the light detection signals by use of the signal processing unit 5. Moreover, the distance between the tip 17a of the light transmission unit 17 and the display screen 3a is calculated based on this area.

Here, the relation between the counted number and the distance may be defined as a distance equal to 0 when the number ranges from 10 to 39 inclusive, a distance equal to 1 when the number ranges from 40 to 69 inclusive, a distance equal to 2 when the number ranges from 70 to 99 inclusive, and a distance equal to 3 when the number is equal to or greater than 100 or equal to or less than 9. Such rules may be stored in advance as data in a memory of the signal processing unit 5, for example. Then, the signal processing unit 5 calculates the distance by checking the actually counted number against the data.

The distance data calculated by the signal processing unit 5 are supplied to the host processor 7. The host processor 7 changes the thickness of lines for drawing a figure such as a circle or a rectangle on the display screen in response to the distance data.

Specifically, the host processor 7 changes images such as characters, lines, figures or pictures displayed by the pixel units 45 in a position of an optical input on the display screen 3a in response to the above-described distance. For example, the host processor 7 changes the thickness of a line to a thin line, a thick line, a medium line, and the like in response to the above-described distance, and changes the color of the line to red, green, yellow or black. Meanwhile, the host processor 7 changes the thickness and the color of the line of a figure such as a circle or a rectangle, which is drawn around the position of the optical input on the display screen 3a, in response to the distance. On the other hand, the host processor 7 changes the thickness and the like of a line, which is drawn from the position of the optical input to a different position which is previously specified, in response to the above-described distance. To be more precise, the host processor 7 draws a thin line when the distance is long, and draws a thick line when the distance is short.

The position calculation unit of the signal processing unit 5 calculates a position of irradiation of the light on the display screen, that is, a light receiving position based on the light receiving region 53 on the display screen 3a. To be more precise, firstly, the signal processing unit 5 sequentially scans the respective photodetector units 47 and receives the light detection signals. By performing this process, the position calculation unit can recognize the positions of the photodetector units 47 which transmit the light detection signals and obtain the position data of the plurality of photodetector units 47 located inside the light receiving region 53. It is easy for the signal processing unit 5 to calculate a center location of the light receiving region 53 or an arbitrary location inside the light receiving region 53.

Center location data of the light receiving region 53 are supplied from the signal processing unit 5 to the host processor 7. The host processor 7 uses the center location data of the light receiving region 53 as a starting point for drawing the figure or the line such as the circle or the rectangle.

Here, the light detection signals from the respective photodetector units 47 are compared with a given thresholds in display unit 3 or the signal processing unit 5, and only the light detection signals greater than this threshold are formed into binary data. The signal processing unit 5 calculates the area, the distance, and the position as described above based on the light detection signals which are formed into the binary data.

Here, the perimeter of the light receiving region 53 may receive lower intensity of light as compared to the center and the boundary may become unclear. Accordingly, it is preferable to use the light detection signals in the form of the binary data so as to define the perimeter of the light receiving region 53 clearly.

Incidentally, the light receiving region 53 is the region where light reception intensity, which is intensity of light that the display screen 3a receives from the light emitting diode 11, is greater than a given value. Accordingly, it is also possible to detect the light reception intensity depending on each of the photodetector units 47 and to define the light receiving region 53 based on distribution of the light reception intensity.

When light emission intensity from the light source device 1 varies depending on the degree of the pressure while the light reception intensity on the display screen varies in proportion to this light emission intensity, the light reception and detection unit detects light reception intensity based on the light detection signals from the photodetector units 47. Then, the distance calculation unit calculates the distance between the light transmission unit and the display screen based on this light reception intensity, and the position calculation unit calculates the position of irradiation of the light on the display screen based on the light reception intensity.

Therefore, in this embodiment, when the tip of the light source device 1 is pressed against the display screen 3a, the light source device 1 changes the area of the light receiving region 53 in response to the degree of this pressure. Meanwhile, the signal processing unit 5 of the display device calculates the distance between the light transmission unit 17 of the light source device and the display screen 3a based on this light receiving region 53. In another case, the light source device 1 changes the light reception intensity on the display screen 3a in response to the degree of the pressure against the display screen 3a. Meanwhile, the signal processing unit 5 of the display device calculates the distance between the light transmission unit 17 and the display screen 3a based on this light reception intensity. By using this distance, it is possible to detect the degree of pressure of the light source device 1 against the display screen 3a. In this way, when inputting the line or the figure, for example, by use of the light from the light source device 1, it is possible to change the processing to draw a thin line when the distance is long and to draw a thick line when the distance is short, for example, in accordance with the degree of pressure. In this way, it is possible to improve usability.

According to this embodiment, the light source unit does not output the light when the tip of the light source device 1 is not pressed against the display screen 3a. Therefore, it is possible to prevent malfunction attributable to outside environment light and to reduce power consumption by the light source unit by stopping the light detecting operation in the display unit.

In this embodiment, the area calculation unit calculates either the area of the region having the light reception intensity equal to or greater than the predetermined value or the area of the light receiving region. Meanwhile, the area-based distance calculation unit calculates the distance between the light transmission unit 17 and the display screen 3a based on this area. By calculating the area receiving the light as described above, it is possible to calculate the distance between the light transmission unit 17 and the display screen 3a easily.

In this embodiment, the position calculation unit calculates the position on the display screen where the light is irradiated, based either on the light reception intensity or on the light receiving region. In this way, it is possible to set the detected position easily to the starting point for drawing, for example, the line or the figure in accordance with the optical input from the light source device.

Next, an optical input display device according to another embodiment will be described.

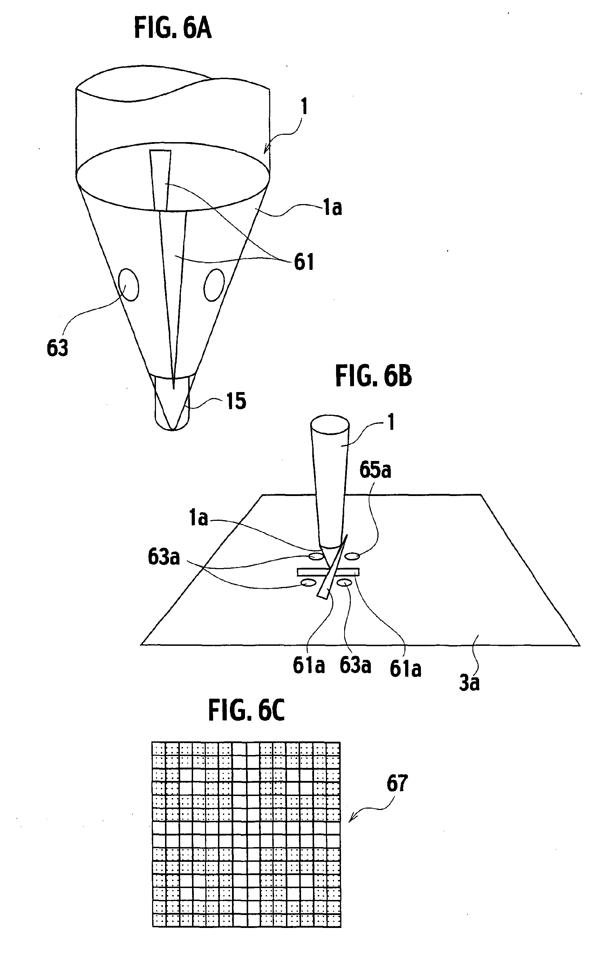

Fig. 6A is an enlarged perspective view of the tip 1a in the pen-shaped light source device 1 which adopts a modified structure. The tip 1a of the light source device 1 in this drawing includes cross-shaped slits 61, and four small-diameter apertures 63 which are formed between the adjacent slits 61 in a facing manner while taking an intersection of the cross-shaped slits 61 as the center. In this way, the shape of the light to be projected on the display screen 3a when irradiating the light from the tip 1a of the light source device 1 is formed into a pattern including a cross-shaped slit form 61a and four dot forms 63a having relatively small diameters formed between the adjacent slits in a facing manner while taking the intersection of the cross-shaped form as the center as shown in Fig. 6B.

When this optical pattern is irradiated on the display screen 3a, the optical pattern is detected by the photodetector units 47 of the display unit 3, and is supplied to the signal processing unit 5 as the light detection signals.

Here, the signal processing unit 5 includes a storage unit, a check unit, and a judgment unit. The storage unit stores a matching pattern 67 as shown in Fig. 6C in advance, which coincides with the shape of the light irradiated from the cross-shaped slits 61 and the small-diameter apertures 63. The check unit checks the pattern based on the light detection signals detected by the photodetector units 47 against the matching pattern stored in the storage unit. The judgment unit judges that the light detection signals coinciding with the matching pattern in this check process as regular signals.

To be more precise, the check unit reads the matching pattern 67 out of the storage unit, then converts the light detection signals supplied from the display unit 3 into binary data by use of the given threshold, and checks this optical pattern converted into the binary data against the matching pattern 67. The judgment unit performs pattern matching to judge that the optical pattern detected by the display unit 3 is the genuine optical pattern outputted form the light source device 1, and that the optical pattern is not affected by other light components coming from outside.

When the optical pattern is judged as the genuine pattern, the signal processing unit 5 calculates the position of this optical pattern on the display screen 3a and the distance between the light transmission unit 17 and the display screen 3a as described above, and supplies the position data and the distance data to the host processor 7. The host processor 7 performs the variety of processing as described above based on the position data and the distance data.

Therefore, in this embodiment, the light source device 1 irradiates the light including the cross-shaped slits and the small-diameter dot shapes onto the display screen. The check unit of the signal processing unit 5 checks the optical pattern including the cross-shaped slits and the small-diameter dot shapes detected by the photodetector units 47 against the matching pattern 67 stored in advance in the storage unit, and the judgment unit judges that the light detection signals of this optical pattern represent the genuine signals when the optical pattern coincides with the matching pattern 67. The above-described artificial optical pattern does not occur in nature or is not created by the environment light. Therefore, the optical pattern can be judged accurately. In this way, the display device can perform the variety of processing properly without causing malfunction attributable to the influence of the environment light from outside.

Although the above-described optical pattern provides the four small-diameter apertures 63 so as to project the four small-diameter optical dot shapes 63a. However, the number of the apertures 63 is not limited only to four, and the number of the apertures may be an arbitrary amount equal to or more than one. Similarly, the shape of the slits 61 is not limited only to the cross shape.

Meanwhile, the light reception intensity of the optical pattern from the light source device 1 varies depending on rotation, inclination, and the degree of pressure of the light source device 1. Accordingly, it is also possible to obtain information concerning the rotation, the inclination, and the degree of pressure of the light source device 1 by performing pattern matching with such deformation taken into consideration.

Next, an optical input display device according to still another embodiment will be described.

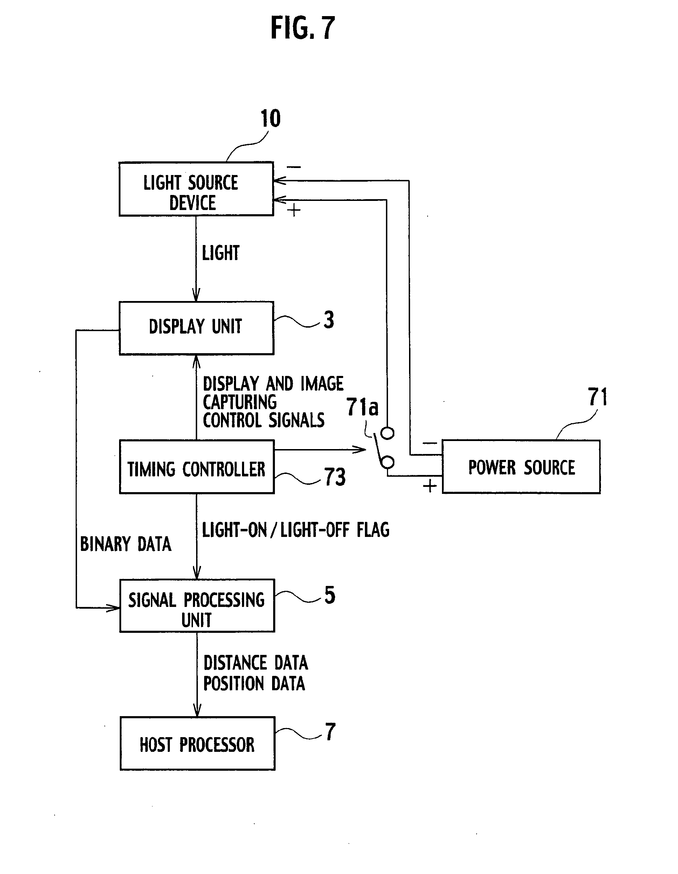

In comparison with the device shown in Fig. 1, a timing controller 73 and a power source 71 subject to on and off control by this timing controller 73 are added to this device as shown in Fig. 7. The timing controller 73 performs synchronous control of operations of the plurality of photodetector units 47 in the display unit 3 and operations of light irradiation by a light source device 10. The photodetector units detect the light reception intensity or the light receiving region on the display screen synchronously with the operations of the photodetector units 47. The light source device 10 uses the power source 71 instead of the battery 25. A switch 71a is connected to an output line of the power source 71, and electricity is supplied from the power source 71 to the light source device 10 through this switch 71a. On and off operations of the switch 71 are controlled by the timing controller 73. Other constitutions and operations in Fig. 7 are similar to those described in the foregoing embodiments. The same constituents are designated by the same reference numerals.

As shown in Fig. 7, the timing controller 73 supplies an image capturing control signal to the display unit 3 in order to operate the plurality of photodetector units 47 in the display unit 3, generates a switch control signal which is synchronous with this image capturing control signal, and controls on and off of the switch 71a by use of this switch control signal. The timing controller 73 turns the light source device 10 on and off by means of the on and off operations of the switch 71. Moreover, the timing controller 73 supplies a light-on flag or a light-off flag indicating a condition of the light source device 10 to the signal processing unit 5.

By performing the synchronous control as described above, if the signal processing unit 5 receives the light detection signals from the photodetector units 47 of the display unit 3 when the light source device 10 is not irradiating the light, i.e. when the light-off flag is outputted from the timing controller 73 to the signal processing unit 5, the signal processing unit 5 can identify that the light detection signals are attributable to the outside environment light. Accordingly, it is possible to prevent malfunction attributable to the outside environment light and the like properly by ignoring the relevant light detection signals. Meanwhile, if the signal processing unit 5 receives the light detection signals from the photodetector units 47 of the display unit 3 when the light source device 10 is irradiating the light, i.e. when the light-on flag is outputted from the timing controller 73 to the signal processing unit 5, the signal processing unit 5 can identify that the light detection signals are the regular light from the pen tip 15 of the light source device 10.

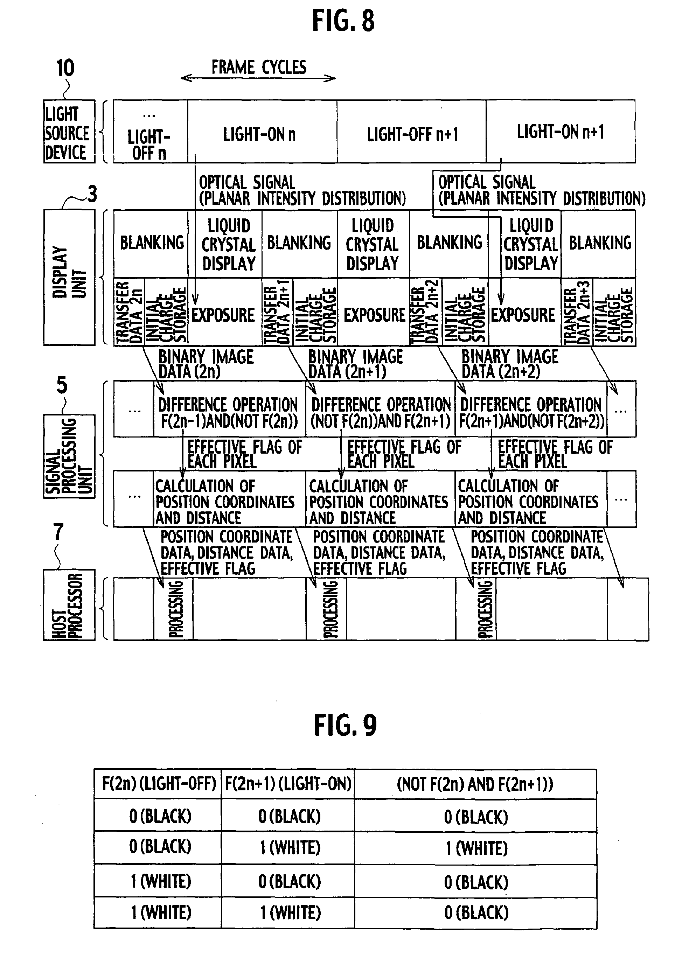

To be more precise, the above-described operation timing is achieved by blinking the light source device 10 synchronously with a double cycle of frame synchronization as shown in Fig. 8. Here, one frame cycle is equivalent to a time period required for sequentially scanning the plurality of the photodetector units 47 just for one round. This time period is also equivalent to a period for obtaining one piece of image capturing data.

In Fig. 8, the light source device 10 is operated to repeat light-on and light-off in the double cycle of the frame synchronization as shown in light-off n, light-on n, light-off n+1, and light-on n+1. This operation is achieved by turning the switch 71a of the power source 71 on and off in accordance with the switch control signal from the timing controller 73 and by supplying the electricity from the power source 71 to the light source device 10 in accordance with the on and off operation.

As shown in Fig. 8, in the display unit 3, the plurality of pixel units 45 alternate liquid crystal display and blanking synchronously with operations to turn the light source device 10 on and off by the image capturing control signal from the timing controller 73, and the plurality of photodetector units 47 alternate exposure (light detection), data transfer, and initial charge storage.

By performing the synchronous control as described above, binary image data (such as F(2n)) representing the light detection signals in the light-off state and binary image data (such as F(2n+1)) representing the light detection signals in the light-on state are alternately supplied to the signal processing unit 5.

As shown in Fig. 9, an operating unit of the signal processing unit 5 calculates a logical product of a logical negation value (not F(2n)) of the binary image data in the light-off state and the binary image data (F(2n+1)) in the light-on state for each pixel. In this way, the logical product becomes equal to 1 only when a piece of the binary image data F(2n) in the light-off state is equal to 0 (black) representing that the light is not detected while a piece of the binary image data F(2n+1) in the light-on state is equal to 1 (white) representing that the light is detected. The judgment unit of the signal processing unit judges that the light detection signal is the regular light detection signal attributable to the genuine light from the light source device 10 only in the foregoing case.

A truth table in Fig. 9 will be described in detail starting from an upper part of the table. Firstly, when the piece of the binary image data F(2n) in the light-off state is equal to 0 (black) representing that the light is not detected and the piece of the binary image data F(2n+1) in the light-on state is also equal to 0 (black), the logical product of the both values (not F(2n) and F(2n+1)) is equal to 0 (black). This result indicates that the light is not detected.

When the piece of the binary image data F(2n) in the light-off state is equal to 0 (black) and the piece of the binary image data F(2n+1) in the light-on state is equal to 1 (white) representing that the light is detected, the above-described logical product is equal to 1 (white). The judgment unit of the signal processing unit 5 judges that the light detection signal from the photodetector unit 47 is the regular light detection signal attributable to the genuine light from the light source device 10 only in this case.

When the piece of the binary image data F(2n) in the light-off state is equal to 1 (white) and the piece of the binary image data F(2n+1) in the light-on state is equal to 0 (black), the above-described logical product is equal to 0 (black). Here, in spite of the light-off state, the piece of the binary image data F(2n) in the light-off state is equal to the logical value 1 indicating that the light is detected. This logical value 1 is brought about as a result of malfunction attributable to the outside environment light or the like. The logical product is set to 0 so as to detect such malfunction. Here, the phenomenon that the piece of the binary image data F(2n+1) in the light-on state is equal to the logical value 0 indicating that the light is not detected in spite of the light-on state means that the light from the light source device 10 is nor irradiated on the position where the photodetector unit 47 relevant to this light detection is located. In other words, this phenomenon means that the relevant photodetector unit 47 is located outside the light receiving region 53 shown in Fig. 4A to Fig. 5B, or that the photodetector unit 47 fails to detect the light from the light source device 10 although the photodetector unit 47 is located inside the light receiving region 53.

When the piece of the binary image data F(2n) in the light-off state is equal to 1 (white) and the piece of the binary image data F(2n+1) in the light-on state is also equal to 1 (white), the above-described logical product is equal to 0 (black). Here, in spite of the light-off state, the piece of the binary image data F(2n) in the light-off state is equal to the logical value 1 indicating that the light is detected. This logical value 1 is brought about as a result of malfunction attributable to the outside environment light or the like. The logical product is set to 0 so as to detect such malfunction.

As described above, in this embodiment, the timing controller 73 synchronously controls the operations of the photodetector units 47 in the display unit 3 and the operations of light irradiation by the light source device 10, and the light reception and detection unit detects either the light reception intensity or the light receiving region on the display screen synchronously with the operations of the photodetector units 47. In this way, even if the photodetector unit 47 erroneously detects the outside environment light and the like when the light source device 10 does not irradiate the light, it is possible to judge such malfunction easily and thereby to prevent malfunction attributable to the outside environment light properly.

In this embodiment, the timing controller 73 blinks the light source device 10 synchronously with the operations of the photodetector units 47. In this way, even if the photodetector unit erroneously detects the outside environment light and the like when the light source device 10 does not irradiate the light, for example, it is possible to judge such malfunction easily and thereby to prevent malfunction attributable to the outside environment light properly.

In this embodiment, the timing controller 73 blinks the light source device 10 synchronously with the double cycle of the frame synchronization. In this way, even if the photodetector unit 47 erroneously detects the outside environment light and the like when the light source device 10 does not irradiate the light, it is possible to judge such malfunction easily and thereby to prevent malfunction attributable to the outside environment light properly.

In this embodiment, the operating unit of the signal processing unit calculates the logical product of the logical negation signal not F(2n) of the binary image data F(2n) in the light-on state and the binary image data F(2n+1) in the light-on state, which are alternately and continuously outputted. By using the result of calculation, it is possible to prevent malfunction attributable to the outside environment light properly.

Here, in this embodiment, the power source 71 and the switch 71a are provided and the switch 71a is subjected to the on and off control by use of a power source switch control signal from the timing controller 73 in order to blink the light source device 10. However, the display device of the invention is not limited only to the above-described configuration. For example, in terms of the light source 1 shown in Figs. 2A, is it also possible to provide a switch on a path for supplying electricity from the battery 25 to the light emitting diode 11, and to subject this switch to the on and off control by use of a control signal from the timing controller 73 in order to blink the light emitting diode 11.

In the embodiments described above, the signal outputted from each of the photodetector units 47 is defined as the light detection signal provided solely for indicating detection of the light. However, since an image is formed by gathering the plurality of output signals from these photodetector units 47, it is also apply image capturing signals instead of the light detection signals. Meanwhile, since the light detection signal is compared with the given threshold by the display unit 3 or the signal processing unit 5 and is outputted as the binary data, it is also possible to set the light detection signal to binary data.

## Claims

1. An optical input display device provided with a light source device and a display device,
the light source device comprising:
a light source unit configured to irradiate light when a tip of the light source unit is pressed against a display screen of the display device; and
a light transmission unit configured to transmit the light from the light source unit so as to change any of light reception intensity and a light receiving region on the display screen in response to a degree of pressure, and
the display device comprising:
a display unit including pixel units configured to display image signals supplied through signal lines and photodetector units configured to detect the light irradiated from the light source device onto the display screen, the pixel units and the photodetector units being provided on intersections of a plurality of scan lines and the plurality of signal lines;
a light reception and detection unit configured to detect any of light reception intensity and the light receiving region of the light from the light transmission unit on the display screen based on light detection signals from the photodetector units; and
a distance calculation unit configured to calculate a distance between the light transmission unit and the display screen based on any of the detected light reception intensity and the detected light receiving region.

2. A display device having an optical input function, the display device comprising:
a display unit including photodetector units configured to detect light irradiated from a light source device onto a display screen and pixel units configured to display image signals supplied through signal lines, the photodetector units and the pixel units being provided on intersections of a plurality of scan lines and the plurality of signal lines, the light source device including a light source unit configured to irradiate the light when a tip of the light source unit is pressed against the display screen, and a light transmission unit configured to transmit the light from the light source unit so as to change any of light reception intensity and a light receiving region on the display screen in response to a degree of pressure;
a light reception and detection unit configured to detect any of light reception intensity and the light receiving region of the light from the light transmission unit on the display screen based on light detection signals from the photodetector units; and
a distance calculation unit configured to calculate a distance between the light transmission unit and the display screen based on any of the detected light reception intensity and the detected light receiving region.

3. The display device according to claim 2,
wherein the distance calculation unit further comprises:
an area calculation unit configured to calculate any of an area having the light reception intensity detected by the light reception and detection unit equal to or greater than a predetermined value and an area of the light receiving region detected by the light reception and detection unit; and
an area-based distance calculation unit configured to calculate the distance between the light transmission unit and the display screen based on any of the areas calculated by the area calculation unit.

4. The display device according to claim 2, further comprising:
a position calculation unit configured to calculate a position of irradiation of the light on the display screen based on any of the light reception intensity and the light receiving region detected by the light reception and detection unit.

5. The display device according to claim 2, further comprising:
a timing controller configured to perform synchronous control of light detecting operations of the photodetector units and light irradiating operations of the light source device,
wherein the light reception and detection unit detects any of the light reception intensity and the light receiving area on the display screen synchronously with the operations of the photodetector units.

6. The display device according to claim 5,
wherein the timing controller blinks the light source unit of the light source device synchronously with the operations of the photodetector units.

7. The display device according to claim 5,
wherein the timing controller blinks the light source unit of the light source device in a double cycle of a frame cycle.

8. The display device according to claim 2,
wherein the light transmission unit comprises cross-shaped slits and small-diameter apertures formed between the adjacent slits in a facing manner while taking an intersection of the cross-shaped slits as a center, and
the display device further comprises:
a storage unit configured to previously store a matching pattern coinciding with a shape of light irradiated out of the cross-shaped slits and the small-diameter apertures;
a check unit configured to check an optical pattern based on the light detection signals detected by the photodetector units against the matching pattern stored in the storage unit; and
a judgment unit configured to judge that the light detection signals coinciding with the matching pattern by use of the check unit are signals detected as the genuine light from the light source device.

9. A light source device comprising:
a light source unit configured to irradiate light when a tip of the light source unit is pressed against a display screen of a display device; and
a light transmission unit configured to transmit the light from the light source unit so as to change any of light reception intensity and a light receiving region on the display screen in response to a degree of pressure.

10. The light source device according to claim 9,
wherein the light transmission unit is formed into any of a cone shape or a pyramid shape at a tip of a pen-shaped housing contains the light source unit inside as capable of transmitting the light, and includes an aperture on a tip of the light transmission unit,
the light transmission unit comprises:
a bar-shaped pen tip capable of transmitting the light; and
a compression spring configured to press the pen tip so as to protrude out of the aperture, and
the light source unit does not generate the light when the pen tip protrudes out of the aperture by an amount equal to or greater than a predetermined distance, and generates the light when the pen tip is pressed against the compression spring by application of a force equal to or greater than a predetermined amount and is thereby moved into the aperture.
